# EUROPEAN PATENT SPECIFICATION

(11) **EP 3 100 605 B1**
(45) Date of publication and mention of the grant of the patent: **18.04.2018**
(21) Application number: 16172839.9
(22) Date of filing: 03.06.2016
(51) Int. Cl.: A01D 34/416, A01D 34/43, A01D 34/535

(54) **A WEEDING ROTOR, AND A SYSTEM AND METHOD FOR WINDING WORKING WIRES ONTO SAID ROTOR**
JÄTROTOR SOWIE SYSTEM UND VERFAHREN ZUM WICKELN DER ARBEITSDRÄHTE AUF DEM ROTOR
ROTOR DE SARCLAGE, AINSI QU'UN SYSTÈME ET UN PROCÉDÉ D'ENROULEMENT DE FILS DE TRAVAIL SUR LEDIT ROTOR

(30) Priority: 03.06.2015 IT UB20150979
(43) Date of publication of application: 07.12.2016
(73) Proprietor: Dragone S.r.l., 14054 Castagnole Delle Lanze (IT)
(72) Inventor: RAPALINO, Claudio, 14054 Castagnole Delle Lanze (IT)
(74) Representative: Eccetto, Mauro

(56) References cited:
- EP-A1- 2 092 816
- WO-A1-2014/083550
- US-A1- 2004 134 078
- US-A1- 2011 302 793
- US-B1- 6 272 756

## Description

The present invention concerns a weeding rotor.

Mechanical weeding is gradually replacing chemical weeding in many areas of application to reduce the contaminating substances emitted into the environment. Following this trend, weeding rotors have recently been improved which comprise a shaft and a plurality of working wires which are distributed along the shaft, and are rotated by the shaft so as to strike the weeds with the working wires to uproot them and/or cut them at ground level.

For example, the rotor subject of the patent application EP 2,092,816 A1 comprises a motorized shaft revolving around a longitudinal axis; a tube arranged around the shaft; a plurality of working wires, each of which is wound around the shaft, are housed inside the tube, and have respective free ends arranged outside the tube; and a device for selectively making the shaft and the tube integral with each other and releasing the tube from the shaft when it is necessary to wind or unwind the working wires. In practice, said rotor allows simultaneous regulation of the length of the ends of the working wires protruding from the tube by relative rotation of the tube with respect to the shaft. It has been found that, in many areas of application, the free ends of the working wires wear out unevenly along the longitudinal axis of the rotor. Consequently, simultaneous regulation of all the working wires does not allow the rotor to be arranged in the optimal configuration, i.e. with all the working wires protruding by the same length with respect to the tube. The uneven wear of the working wires requires some working wires to be replaced before other working wires, but said rotor does not allow one single working wire to be wound without altering the configuration of the other working wires.

In the patent application WO 2014/083550 a rotor is proposed comprising a motorized shaft with hexagonal section which extends along a longitudinal axis; a plurality of modules arranged around the shaft and coupled to one another in the axial direction; a plurality of anchorings, each of which are arranged inside a respective module and are coupled to the shaft; a plurality of working wires, each of which are coupled to a respective anchoring, are wound inside a respective module, and have two opposite ends which protrude from the module. In use, the modules are reciprocally axially engaged and rotate integrally with the shaft. When it is necessary to elongate the free ends of a working wire, the modules are released and left free to rotate with respect to the shaft and the respective anchorings to unwind the working wire. Replacement of the working wire is, however, laborious and time consuming because the structure of the rotor requires the inside of the module to be accessed manually and the working wire to be coupled to the anchoring device before being able to rotate the module with respect to the shaft and wind the working wire inside the module. Document US 2004/0134078 A discloses a trimmer head wherein the driveline of the power tool is connected to a core member; one single spool is mounted to the core member and directly driven by the core member; and a housing is mounted for axially sliding on the core member and can be freely rotated with respect to the spool and the core member in order to wind a new line. WO 2014/083550 and US 2004/0134078 share the same basic principle so that each one of these document cannot mutually remedy to their drawbacks.

One object of the present invention is to produce a rotor of the type identified above which is free from the drawbacks of the known art.

According to the present invention, a weeding rotor is produced, in particular for use in the agricultural field, the rotor comprising:
- a tubular shaft which extends along a longitudinal axis and is motorized to rotate around the longitudinal axis, and comprises a cylindrical wall provided with a plurality of first openings facing each other two by two;
- a plurality of spools housed in the tubular shaft and placed side by side along the longitudinal axis, each spool being engageable by a tool configured to be inserted into the spools in axial direction, and to engage one of the spools to rotate the spool to rotate about the longitudinal axis with respect to the remaining spools and the tubular shaft, each spool having two second openings aligned with each other and which can be aligned with two respective first openings;
- a plurality of working wires, each of which is windable about a respective spool and configured to arrange two respective end portions through two respective first openings outside the tubular shaft; and
- a pushing mechanism for selectively compressing the spools axially against each other and against an end of the tubular shaft.

Thanks to the present invention each spool can rotate freely with respect to the other spools and the tubular shaft, when it is necessary to elongate the working wire or wind a new working wire on the spool, and be made integral with the tubular shaft when the rotor is in the working configuration. Furthermore, it is possible to insert a new working wire through the tubular shaft and the spool when the first and the second openings are aligned with each other, and retain the working wire on the spool by simply inserting it in the second openings without having to disassemble the rotor, thus benefiting productivity.

The present invention also concerns a system for winding working wires onto a weeding rotor which is free from the drawbacks of the known art.

According to the present invention a system is produced for winding working wires onto a weeding rotor, the system comprising:
- a rotor as subject of the invention; and
- a tool configured to be inserted in an axial direction inside the spools, and engage one of the spools to rotate the spools with respect to the remaining spools and with respect to the tubular shaft.

In practice the tool allows each spool to be rotated, and the working wire to be rapidly wound, thus benefiting productivity.

The present invention further concerns a method for winding working wires onto a weeding rotor which is free from the drawbacks of the known art.

According to the present invention a method is provided for winding a working wire onto a weeding rotor as subject of the invention, the method comprising the steps of:
- blocking the rotation of the tubular shaft;
- releasing the pushing mechanism to allow the rotation of each spool about the longitudinal axis;
- rotating an empty spool so as to align the second openings with the corresponding first two openings by means of a tool engaged with the spool;
- inserting a working wire through the first and the second openings until the working wire has two portions of substantially equal length on opposite sides of the tubular shaft;
- rotating the spool by means of the tool to wind the two portions of working wire around the spool until the length of the two portions of working wire protruding from the tubular shaft corresponds to a desired length.

In practice, winding of the working wire can be performed very rapidly and, therefore, the periods of inactivity of the rotor are brief.

Further characteristics and advantages of the present invention will appear clear from the following description of a non-limiting embodiment example thereof, with reference to the figures of the accompanying drawings, in which:
- Figure 1 is an elevation view, with parts removed for clarity and parts in section, of a weeding rotor produced according to the present invention;
- Figure 2 is a longitudinal section view, with parts removed for clarity, of the rotor of Figure 1;
- Figure 3 is an elevation view, with parts in section and with parts exploded, of the rotor of Figure 1;
- Figure 4 is a cross section view, with parts removed for clarity, of the rotor of Figure 3;
- Figures 5, 6 and 7 are respectively an elevation view, with parts removed for clarity, parts in section and parts exploded, and two views in cross section, with parts removed for clarity, of replacement steps of the working wire;
- Figures 8 and 9 are respective elevation views, with parts removed for clarity, of a tool configured to replace the working wire in the rotor of Figure 1; and
- Figures 10 and 11 are cross section views, with parts removed for clarity, of a detail of Figure 8 and Figure 9 respectively.

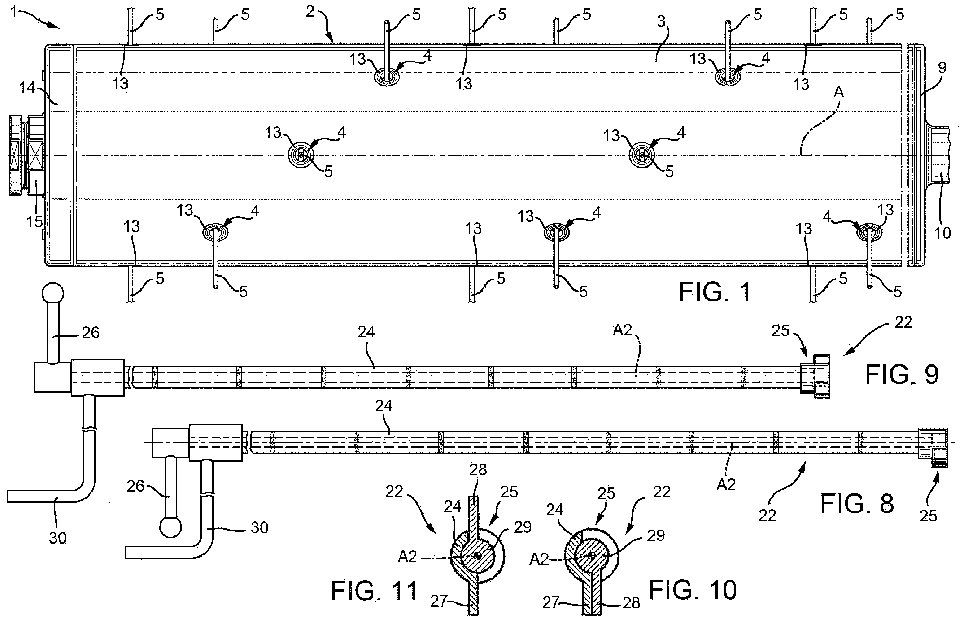

In figure 1 the reference number 1 indicates a weeding rotor, in particular for use in the agricultural field. The rotor 1 comprises a tubular shaft 2, which extends along a longitudinal axis A, is motorized to rotate about the longitudinal axis A, and comprises a cylindrical wall 3 provided with a plurality of openings 4 facing each other two by two in respective diametral directions; a plurality of working wires 5 housed inside the tubular shaft 2, the free ends of which protrude from the openings 4.

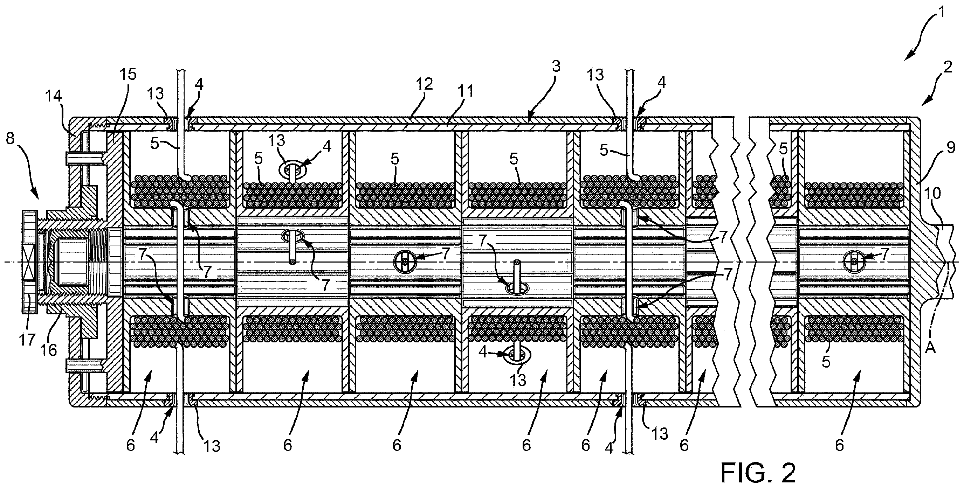

With reference to figure 2, the rotor 1 comprises a plurality of spools 6 housed in the tubular shaft 2 and placed side by side along the longitudinal axis A. Each spool 6 selectively revolves around the longitudinal axis A with respect to the tubular shaft 2, and has at least two openings 7 aligned with each other and which can be aligned with two respective openings 4. Each working wire 5 is wound around a respective spool 6 and has two respective end portions outside the tubular shaft 2. The rotor 1 further comprises a pushing mechanism 8 for selectively compressing the spools 6 axially against each other and against one end of the tubular shaft 2 to make them integral with the tubular shaft 2 and to selectively release the spools 6 so that they are free to rotate with respect to the tubular shaft 2. In further detail, the tubular shaft 2 comprises a blind bottom 9 integral with a connection 10 coupled with a motive member not illustrated in the attached figures. The cylindrical wall 3 comprises a metal wall 11 integral with the blind bottom 9; a sheath 12 made of plastic arranged around the metal wall 11; and a plurality of bushings 13 each of which are arranged at a respective opening 4 to guide the working wire 5 and reduce the friction. In the case illustrated, the pushing mechanism 8 comprises a cover 14 screwed onto the tubular shaft 2; a pushing member 15, which is arranged in contact with an end spool 6 and is guided in an axial direction by the cover 14; and a control member 16, which is guided in a revolving manner about the axis A by the cover 14, and extends on the outside of the tubular shaft 2 so as to be accessible for an operator. In practice, the cover 14, the pushing member 15 and the control member 16 are coupled so as to convert the rotational motion of the control member 16 about the axis A into a translational motion of the pushing member 15 along the axis A. In other words, the control member 16 includes a threaded sleeve, which engages with a sleeve portion of the pushing member 15. As a whole, the cover 14 is ring-shaped to house the pushing mechanism 8, which is ring-shaped and defines a gap for allowing access to the interior of the spools. The tubular shaft 2 further comprises a threaded cap 17 configured to be screwed to the inside of the pushing member 15 to close said gap.

With reference to figure 1, the openings 4 are distributed along the cylindrical wall 3 with constant pitch, in particular the openings 4 are distributed along the cylindrical wall 3 along two respective helical paths.

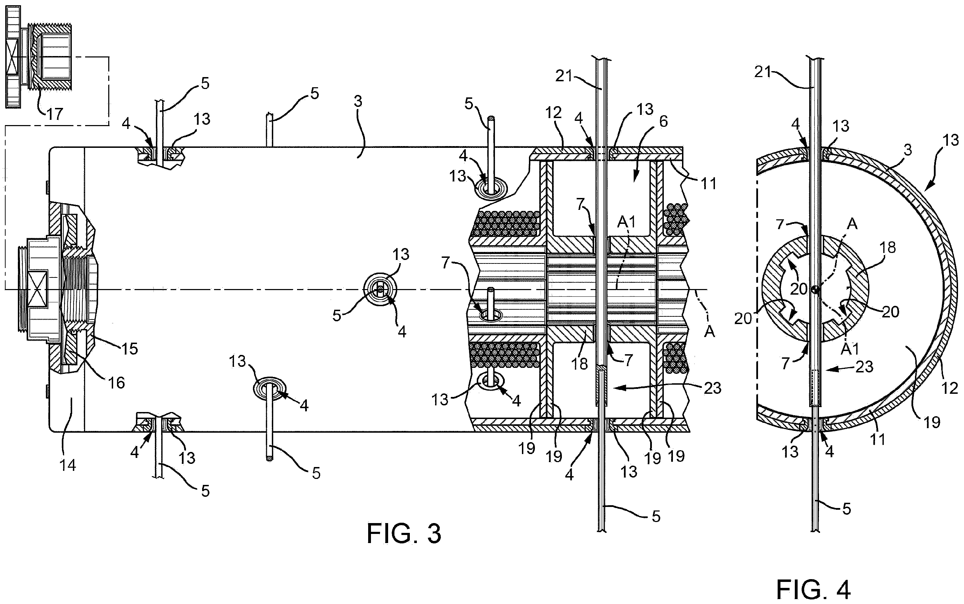

With reference to figure 3, each spool 6 comprises a cylinder 18 and two rims 19 and has an axis A1 substantially coinciding with the longitudinal axis A. The rims 19 have an external diameter slightly smaller than the internal diameter of the tubular shaft 2 so as to allow a precise guide and coaxiality between the spool 6 and the tubular shaft 2. In the case illustrated, the openings 7 are arranged along the cylinder 18 and allow the passage of the working wire 5. Each spool 6 has a coupling zone along the inner face of the cylinder 18. In particular, the cylinder 18 has axial grooves 20.

In an embodiment not illustrated of the present invention, the cylinder is defined by bars spaced from one another which connect the rims and define openings for the passage of the working wire.

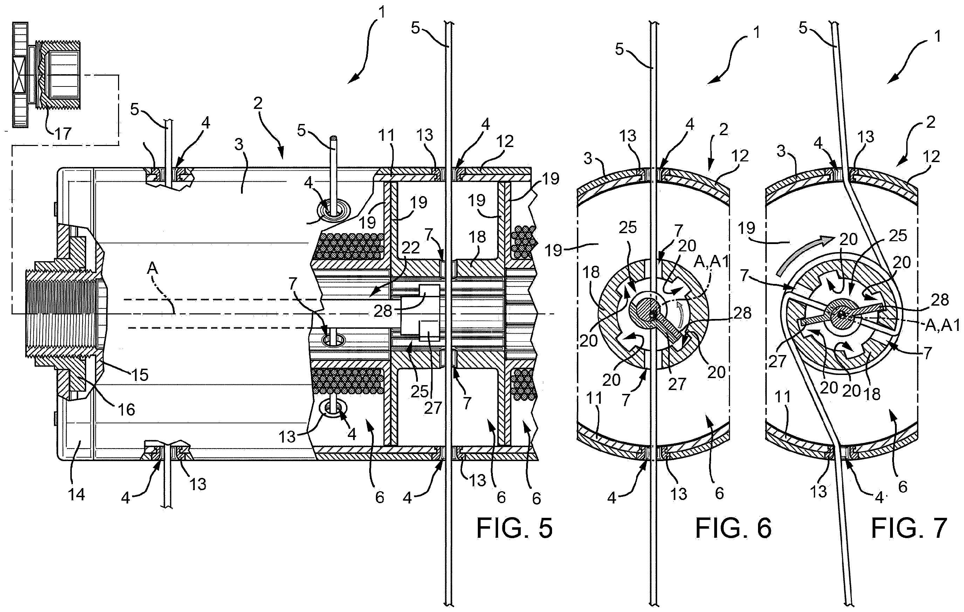

With reference to Figures 3 to 11 a system is described for winding working wires 5 onto the rotor 1, in particular to wind the working wire 5 around a spool 6. The system comprises, in addition to the rotor 1, a needle 21 (Figures 3 and 4) to insert the working wire 5 through the openings 4 and 7 of the rotor 1; and a tool 22 (Figures 5-11) configured to be inserted in an axial direction inside the spools 6, and engage one of the spools 6 and to rotate the spool 6 with respect to the remaining spools 6 and with respect to the tubular shaft 2.

With reference to Figures 3 and 4, the needle 21 has a coupling portion 23, in this case a cavity, configured to provisionally retain the working wire 5. The needle 21 is configured to engage in a sliding manner a pair of openings 4 and a pair of respective openings 7 when the latter are aligned in a diametral direction with the openings 4.

With reference to Figures 8 to 11, the tool 22 comprises a hollow elongated body 24 which extends along an axis A2; a selectively expandable head 25 arranged at a first end of the elongated body 24; and a control member 26 arranged at a second end of the elongated body 24 to control the expandable head 25.

According to the detailed illustrations of Figures 10 and 11, the expandable head 25 comprises two fins 27 and 28 which extend radially with respect to the axis A2 and reciprocally revolve about the axis A2. The fin 27 is integral with the elongated body 24, while the fin 28 is integral with a shaft 29, which is housed in a revolving manner inside the elongated body 24 and integral with the control member 26 which, in the case illustrated, is a lever. The tool 22 comprises marks along the elongated body 24 to mark the position of the expandable head 25 inside the rotor 1 when the tool 22 is inserted in the tubular shaft 2, and a crank 30 to rotate the head 25 when engaged with a spool 6.

The structure of the rotor 1 allows both elongation and fitting of one or more working wires 5 in an easy rapid manner independently of the other working wires 5. To elongate an excessively worn working wire 5, which is therefore shorter than the others, it is sufficient to loosen the pushing mechanism 8 and pull the opposite ends of the worn working wire 5 so as to rotate the spool 6 on which the working wire 5 is wound. In this way, if a sufficient length of the working wire 5 is still wound around the spool 6, it is possible to elongate the ends of the working wire 5 until the desired length is reached. At this point, the pushing mechanism 8 is operated to tighten the spools 6 and make them integral with each other and with the tubular shaft 2.

If, on the other hand, the working wire 5 does not have a sufficient length to guarantee the necessary elongation, the worn working wire 5 is replaced with a new working wire 5 with length of approximately 10/12 metres. Winding of the working wire 5 comprises rotating the empty spool 6 so as to align the openings 7 with the two openings 4; inserting the working wire 5 through the empty spool 6 and through the openings 4 and 7 until the working wire 5 has two portions substantially of equal length on opposite sides of the tubular shaft 2; rotating the spool 6 by means of the tool 22 to wind the two portions of working wire 5 around the spool 6 until the length of the two portions of working wire 5 corresponds to a desired length.

The insertion of the working wire 5 through the openings 4 and 7 can be facilitated by use of the needle 21.

Once the working wire 5 has been wound on the spool 6, the spools 6 are blocked by the pushing mechanism 8, and the cap 17 is re-fitted.

Lastly it is obvious that modifications and variations can be made to the rotor described here without departing from the scope of the attached claims.

## Claims

1. A weeding rotor, in particular to be used in the agricultural field, the rotor comprising:
- a tubular shaft (2), which extends along a longitudinal axis (A), is motorized to rotate about the longitudinal axis (A), and comprises a cylindrical wall (3) provided with a plurality of first openings (4) facing each other two by two; **characterized by** comprising
- a plurality of spools (6) housed in the tubular shaft (2) and placed side by side along the longitudinal axis (A), each spool (6) being engageable by a tool (22) configured to be inserted into the spools (6) in axial direction, and to engage one of the spools (6) to rotate the spool (6) about the longitudinal axis (A) with respect to the remaining spools (6) and tubular shaft (2), each spool (6) having two second openings (7) which are aligned with each other and can be aligned with two respective first openings (4);
- a plurality of working wires (5), each of which is windable about a respective spool (6) and is configured to arrange two respective end portions through two respective first openings (4) outside the tubular shaft (2); and
- a pushing mechanism (8) for selectively compressing the spools (6) axially against each other and against an end of the tubular shaft (2).

2. A rotor as claimed in Claim 1, wherein the first openings (4) are distributed along the cylindrical wall (3) with constant pitch, in particular the first openings (4) are distributed along the cylindrical wall (3) along two respective identical helical paths staggered by 180° about the longitudinal axis (A).

3. A rotor as claimed in any one of the preceding Claims, wherein each spool (6) comprises a cylinder (18) and two rims (19) and has an axis (A1) substantially coinciding with the longitudinal axis (A).

4. A rotor as claimed in Claim 3, wherein the rims (19) have a slightly smaller outer diameter than the inner diameter of the tubular shaft (2).

5. A rotor as claimed in Claim 3, wherein each spool (6) has a coupling zone along the inner face of a respective cylinder (18) so as to be engaged along the coupling zone and to be rotated about the longitudinal axis (A) with respect to the tubular shaft (2).

6. A rotor as claimed in any one of the preceding Claims, wherein the tubular shaft (2) comprises a blind bottom (9) and a cover (14), in particular the cover (14) is screwed onto the cylindrical wall (3).

7. A rotor as claimed in Claim 6, wherein the pushing mechanism (8) comprises a pushing member (15), which is arranged in contact with an end spool (6) and is guided by the cover (14) in axial direction; and a control member (16) rotatably guided about the longitudinal axis (A) and coupled to the pushing member (15) so as to convert the rotational motion of the control member (16) into a translational motion along the longitudinal axis (A) of the pushing member (15).

8. A rotor as claimed in Claim 7, wherein the pushing mechanism (8) is annular in shape and defines a gap for allowing access to the interior of the spools (6); the tubular shaft (2) comprising a cap (17) for closing said gap.

9. A system for winding working wires onto a weeding rotor, the system comprising:
- a rotor (1) as claimed in any one of the preceding Claims;
- a tool (22) configured to be inserted into the spools (6) in axial direction, and to engage one of the spools (6) to rotate the spool (6) with respect to the remaining spools (6) and with respect to the tubular shaft (2).

10. A system as claimed in Claim 9, wherein the tool (22) comprises an elongated body (24); a selectively expandable head (25) arranged at a first end of the elongated body (24); and a control member (26) of the expandable head (25) arranged at a second end.

11. A system as claimed in Claim 10, wherein the elongated element (24) comprises marks for identifying the spool (6) at which the expandable head (25) is located.

12. A system as claimed in any one of the Claims from 9 to 10, and comprising a needle (21) configured to be coupled to an end of a working wire (5) and to be inserted through two first facing openings (4) and two second openings (7) aligned with the first two openings (4).

13. A method for winding working wires onto a weeding rotor as claimed in any one of the Claims from 1 to 8, the method comprising the steps of
- blocking the rotation of the tubular shaft (2);
- releasing the pushing mechanism (8) to allow the rotation of each spool (6) about the longitudinal axis (A);
- rotating an empty spool (6) so as to align the second openings (7) with the two first corresponding openings (4) by means of a tool (22) engaged with the spool (6);
- inserting a working wire (5) through the first and second openings (4, 7) until the working wire (5) has two portions which are substantially equal in length, on opposite sides of the tubular shaft (2);
- rotating the spool (6) by means of the tool (22) to wind the two portions of working wire (5) about the spool (6) until the length of the two portions of working wire (5) protruding from the tubular shaft (2) corresponds to a desired length.

## Patentansprüche

1. Ein Jät-Rotor, insbesondere für den Einsatz im landwirtschaftlichen Bereich, wobei der Rotor Folgendes aufweist:
- eine röhrenförmige Welle (2), die sich entlang einer Längsachse (A) erstreckt, motorisiert ist, um sich um die Längsachse (A) zu drehen, und eine zylindrische Wand (3) aufweist, die mit einer Vielzahl von ersten Öffnungen (4) versehen ist, die einander paarweise gegenüberliegen;
**dadurch gekennzeichnet, dass** er Folgendes umfasst:
- eine Vielzahl von Spulen (6), die in der rohrförmigen Welle (2) untergebracht sind und nebeneinander entlang der Längsachse (A) angeordnet sind, wobei jede Spule (6) mit einem Werkzeug (22) in Eingriff zu bringen ist, das so konfiguriert ist, dass es in axialer Richtung in die Spulen (6) eingesetzt werden kann, und um mit einer der Spulen (6) in Eingriff zu gelangen, um die Spule (6) um die Längsachse (A) in Bezug auf die restlichen Spulen (6) und die rohrförmige Welle zu drehen; wobei jede Spule (6) zwei zweite Öffnungen (7) aufweist, die zueinander ausgerichtet sind und mit jeweils zwei ersten Öffnungen (4) ausgerichtet werden können;
- eine Vielzahl von Arbeitsdrähten (5), von denen jeder um eine entsprechende Spule (6) wickelbar ist und so konfiguriert ist, dass er zwei entsprechende Endabschnitte durch zwei entsprechende erste Öffnungen (4) außerhalb der rohrförmigen Welle (2) anordnet; und
- einen Schiebemechanismus (8) zum selektiven axialen Zusammendrücken der Spulen (6) gegeneinander und gegen ein Ende der rohrförmigen Welle (2).

2. Ein Rotor nach Anspruch 1, wobei die ersten Öffnungen (4) entlang der zylindrischen Wand (3) mit konstantem Abstand verteilt sind, wobei insbesondere die ersten Öffnungen (4) entlang der zylindrischen Wand (3) entlang zweier jeweils identischer, spiralförmiger Bahnen verteilt sind, die um 180° um die Längsachse (A) verdreht sind.

3. Ein Rotor nach irgendeinem der vorstehenden Ansprüche, wobei jede Spule (6) einen Zylinder (18) und zwei Felgen (*rims*) (19) umfasst und eine Achse (A1) aufweist, die im Wesentlichen mit der Längsachse (A) zusammenfällt.

4. Ein Rotor nach Anspruch 3, wobei die Felgen (19) einen etwas kleineren Außendurchmesser als der Innendurchmesser der rohrförmigen Welle (2) aufweisen.

5. Ein Rotor nach Anspruch 3, wobei jede Spule (6) eine Kopplungszone entlang der Innenfläche eines jeweiligen Zylinders (18) aufweist, um entlang der Kopplungszone in Eingriff zu kommen und um bezüglich der rohrförmigen Welle (2) um die Längsachse (A) gedreht zu werden.

6. Ein Rotor nach irgendeinem der vorstehenden Ansprüche, wobei die rohrförmige Welle (2) einen Blindboden (9) und eine Abdeckung (14) aufweist, wobei insbesondere die Abdeckung (14) auf die zylindrische Wand (3) aufgeschraubt ist.

7. Ein Rotor nach Anspruch 6, wobei der Schiebemechanismus (8) Folgendes umfasst: ein Schiebeelement (15), das in Kontakt mit einer Endspule (6) angeordnet ist und von der Abdeckung (14) in axialer Richtung geführt wird; und ein Steuerelement (16), das drehbar um die Längsachse (A) geführt und mit dem Schiebeelement (15) gekoppelt ist, um die Drehbewegung des Steuerelements (16) in eine translatorische Bewegung entlang der Längsachse (A) des Schiebeelements (15) umzuwandeln.

8. Ein Rotor nach Anspruch 7, wobei der Schiebemechanismus (8) ringförmig ist und einen Spalt definiert, um Zugang zum Inneren der Spulen (6) zu ermöglichen; wobei der rohrförmige Schaft (2) eine Kappe (17) zum Schließen des genannten Spaltes aufweist.

9. Ein System zum Aufwickeln von Arbeitsdrähten auf einen Jät-Rotor, wobei das System Folgendes umfasst:
- einen Rotor (1) nach irgendeinem der vorstehenden Ansprüche;
- ein Werkzeug (22), das konfiguriert ist, um in axialer Richtung in die Spulen (6) eingesetzt werden zu können, und um in eine der Spulen (6) einzugreifen, damit die Spule (6) in Bezug auf die restlichen Spulen (6) und in Bezug auf die rohrförmige Welle (2) gedreht wird.

10. Ein System nach Anspruch 9, wobei das Werkzeug (22) Folgendes umfasst: einen länglichen Körper (24); einen selektiv expandierbaren Kopf (25), der an einem ersten Ende des länglichen Körpers (24) angeordnet ist; und ein Steuerelement (26) des expandierbaren Kopfes (25), das an einem zweiten Ende angeordnet ist.

11. Ein System nach Anspruch 10, wobei das langgestreckte Element (24) Markierungen zur Identifizierung der Spule (6) aufweist, an der sich der expandierbare Kopf (25) befindet.

12. Ein System nach irgendeinem der Ansprüche von 9 bis 10, und das eine Nadel (21) umfasst, die so konfiguriert ist, dass sie mit einem Ende eines Arbeitsdrahtes (5) gekoppelt und durch zwei erste gegenüberliegende Öffnungen (4) und zwei zweite Öffnungen (7) eingeführt werden kann, die mit den ersten beiden Öffnungen (4) fluchten.

13. Ein Verfahren zum Aufwickeln von Arbeitsdrähten auf einen Jät-Rotor nach irgendeinem der Ansprüche von 1 bis 8, wobei das Verfahren die folgenden Schritte umfasst:
- Blockieren der Rotation der rohrförmigen Welle (2);
- Lösen des Schiebemechanismus (8), um die Drehung jeder Spule (6) um die Längsachse (A) zu ermöglichen;
- Drehen einer leeren Spule (6), um die zweiten Öffnungen (7) mithilfe eines Werkzeugs (22), das mit der Spule (6) in Eingriff steht, auf die beiden ersten entsprechenden Öffnungen (4) auszurichten;
- Einführen eines Arbeitsdrahtes (5) durch die erste und zweite Öffnung (4, 7), bis der Arbeitsdraht (5) zwei im Wesentlichen gleich lange Abschnitte auf gegenüberliegenden Seiten der rohrförmigen Welle (2) aufweist;
- Drehen der Spule (6) mithilfe des Werkzeugs (22), um die beiden Abschnitte des Arbeitsdrahtes (5) um die Spule (6) zu wickeln, bis die Länge der beiden Abschnitte des Arbeitsdrahtes (5), die aus der rohrförmigen Welle (2) herausragen, einer gewünschten Länge entspricht.

## Revendications

1. Rotor de sarclage, en particulier destiné à être utilisé dans le domaine de l'agriculture, le rotor comprenant :
- un arbre tubulaire (2), lequel s'étend suivant un axe longitudinal (A), est motorisé de manière à ce qu'il soit entraîné en rotation autour de l'axe longitudinal (A) et comprend une paroi cylindrique (3) pourvue d'une pluralité de premières ouvertures (4) qui se font face les unes les autres deux par deux ;
**caractérisé en ce qu'**il comprend :
- une pluralité de bobines (6) logées dans l'arbre tubulaire (2) et qui sont placées côte à côte suivant l'axe longitudinal (A), chaque bobine (6) pouvant être engagée par un outil (22) qui est configuré pour être inséré à l'intérieur des bobines (6) dans une direction axiale pour engager l'une des bobines (6) de manière à ce qu'il entraîne en rotation la bobine (6) autour de l'axe longitudinal (A) par rapport aux bobines restantes (6) et à l'arbre tubulaire (2), chaque bobine (6) comportant deux secondes ouvertures (7) qui sont alignées l'une par rapport à l'autre et qui peuvent être alignées par rapport à deux premières ouvertures respectives (4) ;
- une pluralité de câbles de travail (5) dont chacun est enroulabe autour d'une bobine respective (6) et est configuré pour agencer deux parties d'extrémité respectives au travers de deux premières ouvertures respectives (4) à l'extérieur de l'arbre tubulaire (2) ; et
- un mécanisme de poussée (8) pour comprimer de façon sélective les bobines (6) axialement les unes contre les autres et contre une extrémité de l'arbre tubulaire (2).

2. Rotor tel que revendiqué selon la revendication 1, dans lequel les premières ouvertures (4) sont distribuées suivant la paroi cylindrique (3) selon un pas constant, en particulier les premières ouvertures (4) sont distribuées suivant la paroi cylindrique (3) suivant deux voies hélicoïdales identiques respectives qui sont décalées de 180° autour de l'axe longitudinal (A).

3. Rotor tel que revendiqué selon l'une quelconque des revendications qui précèdent, dans lequel chaque bobine (6) comprend un cylindre (18) et deux bords (19) et comporte un axe (A1) qui coïncide sensiblement avec l'axe longitudinal (A).

4. Rotor tel que revendiqué selon la revendication 3, dans lequel les bords (19) présentent un diamètre externe légèrement plus petit que le diamètre interne de l'arbre tubulaire (2).

5. Rotor tel que revendiqué selon la revendication 3, dans lequel chaque bobine (6) comporte une zone de couplage suivant la face interne d'un cylindre respectif (18) de manière à réaliser un engagement suivant la zone de couplage et de manière à réaliser un entraînement en rotation autour de l'axe longitudinal (A) par rapport à l'arbre tubulaire (2).

6. Rotor tel que revendiqué selon l'une quelconque des revendications qui précèdent, dans lequel l'arbre tubulaire (2) comprend un fond borgne (9) et un capot (14), en particulier le capot (14) est vissé sur la paroi cylindrique (3).

7. Rotor tel que revendiqué selon la revendication 6, dans lequel le mécanisme de poussée (8) comprend un élément de poussée (15), lequel est agencé en contact avec une bobine d'extrémité (6) et est guidé par le capot (14) dans une direction axiale ; et un élément de commande (16) qui est guidé à rotation autour de l'axe longitudinal (A) et qui est couplé à l'élément de poussée (15) de manière à convertir le mouvement de rotation de l'élément de commande (16) selon un mouvement de translation suivant l'axe longitudinal (A) de l'élément de poussée (15).

8. Rotor tel que revendiqué selon la revendication 7, dans lequel le mécanisme de poussée (8) est de forme annulaire et il définit un espace pour permettre un accès à l'intérieur des bobines (6) ; l'arbre tubulaire (2) comprenant un capuchon (17) pour fermer ledit espace.

9. Système pour enrouler des câbles/fils de travail sur un rotor de sarclage, le système comprenant :
- un rotor (1) tel que revendiqué selon l'une quelconque des revendications qui précèdent ;
- un outil (22) qui est configuré pour être inséré à l'intérieur des bobines (6) dans une direction axiale et pour engager l'une des bobines (6) afin d'entraîner en rotation la bobine (6) par rapport aux bobines restantes (6) et par rapport à l'arbre tubulaire (2).

10. Système tel que revendiqué selon la revendication 9, dans lequel l'outil (22) comprend un corps allongé (24) ; une tête extensible de façon sélective (25) qui est agencée au niveau d'une première extrémité du corps allongé (24) ; et un élément de commande (26) de la tête extensible (25) agencé au niveau d'une seconde extrémité.

11. Système tel que revendiqué selon la revendication 10, dans lequel l'élément allongé (24) comprend des marques pour identifier la bobine (6) au niveau de laquelle la tête extensible (25) est située.

12. Système tel que revendiqué selon l'une quelconque des revendications 9 et 10, et comprenant une aiguille (21) configurée pour être couplée à une extrémité d'un câble de travail (5) et pour être insérée au travers de deux premières ouvertures se faisant face (4) et de deux secondes ouvertures (7) alignées par rapport aux deux premières ouvertures (4).

13. Procédé pour enrouler des câbles de travail sur un rotor de sarclage tel que revendiqué selon l'une quelconque des revendications 1 à 8, le procédé comprenant les étapes consistant à :
- bloquer la rotation de l'arbre tubulaire (2) ;
- libérer le mécanisme de poussée (8) pour permettre la rotation de chaque bobine (6) autour de l'axe longitudinal (A) ;
- entraîner en rotation une bobine vide (6) pour aligner les secondes ouvertures (7) par rapport aux deux premières ouvertures correspondantes (4) au moyen d'un outil (22) qui est engagé avec la bobine (6) ;
- insérer un câble de travail (5) au travers des premières et secondes ouvertures (4, 7) jusqu'à ce que le câble de travail (5) comporte deux parties qui soient sensiblement de longueurs égales, sur des côtés opposés de l'arbre tubulaire (2) ; et
- entraîner en rotation la bobine (6) au moyen de l'outil (22) de manière à enrouler les deux parties du câble de travail (5) autour de la bobine (6) jusqu'à ce que la longueur des deux parties du câble de travail (5) qui font saillie depuis l'arbre tubulaire (2) corresponde à une longueur souhaitée.
